# EUROPEAN PATENT APPLICATION

(11) **EP 2 325 281 A1**
(43) Date of publication of application: **25.05.2011**
(21) Application number: 09176922.4
(22) Date of filing: 24.11.2009
(51) Int. Cl.: C10G 3/00, C10G 11/00, C10G 69/04, C10L 1/04

(54) **PROCESS FOR THE CATALYTIC CRACKING OF PYROLYSIS OILS**

(71) Applicant: Shell Internationale Research Maatschappij B.V., 2596 HR The Hague (NL)
(72) Inventor: Hogendoorn, Johannes Antonius, 7522 NB Enschede (NL); Kersten, Sasha Reinier Aldegonda, 7522 NB Enschede (NL); De Miguel Mercader, Ferran, 7522 NB Enschede (NL)

(57) **Abstract**

The present invention provides a process for catalytic cracking of a pyrolysis oil derived from material comprising lignocellulose, comprising the steps of a) subjecting a feed comprising the pyrolysis oil to a hydrodeoxygenation step to obtain a product stream comprising a partially deoxygenated pyrolysis oil; b) separating the partially deoxygenated pyrolysis oil having an oxygen content of from 5 to 30 wt% from the product stream obtained in a); c) contacting the partially deoxygenated pyrolysis oil obtained in b) in the presence of a hydrocarbon feed derived from a mineral crude oil with a cracking catalyst under catalytic cracking conditions to obtain a deoxygenated and cracked product stream; and d) separating at least one product fraction from the product stream obtained in c).

## Description

### Field of the invention

The present invention relates to a process for catalytic cracking of pyrolysis oils to obtain chemicals and fuel products.

### Background of the invention

With the diminishing supply of crude oil, the use of renewable energy sources is becoming increasingly important as a feedstock for catalytic cracking processes. Plants and animal biomass are being used to produce liquid and gaseous fuels through catalytic cracking process. An advantage of using biomass as the source of fuels and chemicals is that the CO2 balance is more favourable as compared to the conventional hydrocarbon feedstock.

One of the existing processes for the conversion of biomass includes the steps of pyrolysing the lignocellulosic material derived from plants to obtain a pyrolysis oil, and upgrading the pyrolysis oil to obtain chemicals and fuel products.

The pyrolysis oil obtained from the pyrolysis of a feed comprising lignocellulose is a mixture of oxygenated compounds, formed during the decomposition of lignin and cellulose in the biomass, and water generated during the process and from the initial moisture content of the biomass. This oxygen and water content in the pyrolysis oil causes a significant reduction in the heating value of the pyrolysis oil. Further, the complex chemical nature and high viscosity adds to the difficulty of processing this pyrolysis oil in standard refinery units. Hence, several processes for upgrading the pyrolysis oil have been proposed in the literature. Examples of these processes include hydrodeoxygenation (HDO) under high hydrogen pressures, Catalytic Cracking and High Pressure Thermal Treatment (HPTT). These upgrading processes for the pyrolysis oil may involve, for instance, removal of the oxygen (usually 95%), decarboxylation, viscosity reduction, sulphur removal, nitrogen removal, and the like.

The existing hydro-deoxygenation (HDO) processes require use of large amounts of hydrogen, usually at high pressure, such as in the range of 250 bar (a) to 350 bar(a), for the removal of oxygen from the pyrolysis oil in the form of water. Some of these processes also suggest a multi-step hydrodeoxygenation to achieve significant (~95%) oxygen removal. These processes entail very high hydrogen consumption, which makes them uneconomical and difficult. US 20080053870 discloses a similar upgrading process where a hydrotreatment step is performed to remove about 93% of the oxygen from the pyrolysis oil before it is subjected to cracking for production of hydrocarbons.

The existing catalytic cracking processes provide products boiling in the gasoline range. However, at comparatively low cracking temperatures of about 370 °C, the amount of oxygenated compounds obtained is high. Further, at higher cracking temperatures of about 410 °C, the production of coke and gas increases at the expense of gasoline yield. The existing HPTT processes provide high degree of oxygen removal with increasing temperatures. However, the average molecular weight of the oil increases with the increase in temperature due to polymerisation of the sugar constituents of the oil, which makes the process uneconomical.

It is therefore evident that while some processes for upgrading the pyrolysis oil to produce fuel products have been disclosed, there is a need for an improvement in the processes for conversion of pyrolysis oils to chemical and fuel products.

### SUMMARY OF THE INVENTION

Accordingly, the present invention provides a process for catalytic cracking of a pyrolysis oil derived from material comprising lignocellulose, comprising the steps of a) subjecting a feed comprising the pyrolysis oil to a hydrodeoxygenation step to obtain a product stream comprising a partially deoxygenated pyrolysis oil; b) separating the partially deoxygenated pyrolysis oil having an oxygen content of from 5 to 30 wt% from the product stream obtained in a); c) contacting the partially deoxygenated pyrolysis oil obtained in b) in the presence of a hydrocarbon feed derived from a mineral crude oil with a cracking catalyst under catalytic cracking conditions to obtain a deoxygenated and cracked product stream; and d) separating at least one product fraction from the product stream obtained in c).The present invention further provides a gasoline and diesel range products obtainable from a product fraction of the at least one product fraction obtained from the aforementioned process.

### Detailed description

It has now been found that a partially deoxygenated pyrolysis oil with an oxygen content of from 10 to 30wt%, when subjected to catalytic cracking under standard refinery cracking conditions and in presence of a hydrocarbon feed results in the formation of chemicals and fuel products such as LCO and gasoline with acceptable properties, and especially negligible oxygen content and without high loss due to side reactions such as coking, at comparable rates as obtained for an unblended hydrocarbon feed.

The process of producing chemicals and fuel products from biomass according to the present invention preferably involves the step of pyrolysis of the biomass to obtain a pyrolysis oil. The biomass feedstock used for present invention may include lignocellulosic material derived from biomass, for instance, agriculture waste, forest residue, wood chips, straw, chaff, grain, grasses, corn, corn husks, weeds, aquatic plants, hay and any cellulose containing biological material or material of biological origin, also including municipal waste or waste paper. Preferably, the biomass feedstock includes forest residue.

The pyrolysis step i) preferably includes a process wherein the biomass feedstock (interchangeably referred to as biomass herein) comprising lignocellulose is decomposed, preferably in the absence of oxygen, into gaseous, liquid and solid decomposition products at high temperatures. The temperature in this step preferably lies in the range of about 400°C to 800°C, more preferably in the range of about 500°C to 700°C, and yet more preferably, the pyrolysis temperature in the range of from 550°C to about 650 °C.

More preferably, the pyrolysis process includes a flash pyrolysis process, wherein the biomass is rapidly heated to a temperature in the range of 400°C to 600°C in the absence of oxygen to produce pyrolysis oil, with yields in the range of 60wt% to 80wt%. A similar process is for instance described in US patent 5,395,455. This process usually yields a product blend comprising water in amounts of up to 40wt%.

The pyrolysis oil, as referred to in the present invention preferably includes a mixture of oxygenated compounds formed during thermal decomposition of lignin and cellulose, and water generated during the decomposition process and from the initial moisture content of the biomass. Preferably, the carbon content of the pyrolysis oil lies in the ranges of 45% to 50 %. Preferably, the water content is in the range of 20 wt% to 30 wt%. More preferably, the pyrolysis oil of the present invention comprises aldehydes in the range of 10 wt% to 20 wt%. More preferably, the pyrolysis oil comprises carboxylic acids in the range of 10 wt% to 15 wt%. Yet more preferably, the pyrolysis oil comprises carbohydrates in the range of 5 wt% to 10 wt%. The oxygen content was determined by elemental analysis of the HDO product, calculating the oxygen content as weight difference after determination and subtraction of carbon and hydrogen content. Again more preferably, the pyrolysis oil comprises phenols in the range of 2 wt% to 5 wt%. Again more preferably, the pyrolysis oil comprises furfurals in the range of 1 wt% to 4 wt%, and/or alcohols and ketones. The pyrolysis oil may also contain nitrogen in the range of 0.1 wt% to 0.5 wt%, and sulphur in the range of 0.01 wt% to 0.02% wt%. The presence of water and nitrogen and sulphur containing compounds makes pyrolysis oil not suitable for processing in standard refinery units.

In step a), the pyrolysis oil is subjected to a hydrodeoxygenation step to obtain a product stream comprising a partially deoxygenated pyrolysis oil. This reaction step is further referred to as hydrodeoxygenation (HDO) reaction. Step a) of the present invention is preferably carried out by contacting the pyrolysis oil with hydrogen in the presence of a suitable hydrogenation catalyst, at suitable conditions to achieve a deoxygenation, i.e. a removal of oxygen containing functionalities and compounds. The reaction may suitably be carried out at elevated pressure and temperature in a suitable reactor, such as for instance in a stirred autoclave, or a trickle flow reactor with a stacked catalyst bed.

The total pressure preferably is in the range of from 250 to 350 bar (a) (25 to 35 MPa), more preferably from 280 to 320 bar (a). Most preferably, the pressure in the autoclave reactor is in the range of from 290 to 310 bar (a). The pressure is preferably regulated by a suitable reducing valve or other suitable means for regulating the hydrogen pressure. It should be noted that due to the high amount of water present in the feed, at e.g. 300°C, the partial pressure is elevated by 100 bar (a) due to the presence of the steam formed. In addition, the production of light gases such as CO, CO₂ and methane also appreciably increase the total reactor pressure. Yet further, the partial pressure of hydrogen preferably is higher than in other HDO processes, since the solubility of hydrogen in a polar solvent such as water is lower than in e.g. non -aqueous hydrocarbon feeds.

It will be understood by those skilled in the art that for the hydrodeoxygenation step at 300 and 350°C the water partial pressure is 86 and 165 bar respectively due to the high amount of water present in the feed and thus the formed steam, giving initial hydrogen partial pressures of ca. 200 and 125 bar, respectively, thus appreciably lower than the total reaction pressure. As an example, when performing the HDO reaction at 300°C, due to forming light gases such as CO₂, CH₄ the H₂ partial pressure decreased to 42 bar. Accordingly, the conditions in step (a) are still considered as mild, although the absolute pressure, hydrogen partial pressure and temperature may seem higher than comparable hydrogenations of hydrocarbon streams.

In step (a), the feedstock, optionally pre-hydrogenated, and hydrogen are contacted with the hydrogenation catalyst under hydro-deoxygenation conditions. Preferably, feedstock and hydrogen are co-currently contacted with the catalyst.

Hydro-deoxygenation conditions for pyrolysis oil containingfeedstocks are known in the art. Typically, the hydro-deoxygenation temperature in step (a) is in the range of from 200 to 400 °C, preferably from 250 to 380 °C, more preferably of from 280 to 340 °C, yet more preferably of from 290 to 320 °C. Reference herein to the hydro-deoxygenation temperature is to the maximum temperature that is occurring in hydro-deoxygenation step (a). Since the hydro-deoxygenation reaction is a strongly exothermic reaction, the temperature in the bottom part of the bed will typically be higher than the temperature in the upper part of the bed.

In step (a), the feedstock, optionally pre-hydrogenated, and hydrogen are contacted with the hydrogenation catalyst under hydro-deoxygenation conditions. Preferably, feedstock and hydrogen are co-currently contacted with the catalyst. Hydro-deoxygenation conditions for pyrolysis oil containing feedstocks are known in the art. Typically, the hydro-deoxygenation temperature in step (a) is in the range of from 200 to 400 °C, preferably from 250 to 380 °C, more preferably of from 280 to 340 °C, yet more preferably of from 290 to 320 °C. Reference herein to the hydro-deoxygenation temperature is to the maximum temperature that is occurring in hydro-deoxygenation step (a). Since the hydro-deoxygenation reaction is a strongly exothermic reaction, the temperature in the bottom part of the bed will typically be higher than the temperature in the upper part of the bed. The catalyst suitably employed in step (a) may be any catalyst known in the art that is suitable for hydro-deoxygenation, typically a hydrogenation or hydrocracking catalyst comprising metals of Group VIII and/or Group VIB of the Periodic Table of Elements or compounds thereof. Examples of such catalysts are catalysts comprising Pd, Pt, reduced Ni, or sulphided CoMo, NiMo or NiW as hydrogenation components on a carrier.

The catalyst preferably comprises a catalyst support and one or more active elements. The active elements may include metals such as Nickel (Ni), Chromium (Cr), Molybdenum (Mo), and Tungsten (W), Cobalt (Co), Platinum (Pt), Palladium (Pd), Rhodium (Rh), Ruthenium (Ru), Iridium (Ir), Osmium (Os), Copper (Cu), iron (Fe), Zinc (Zn), Gallium (Ga), Indium (In) and Vanadium (V) in elementary form, alloys or mixtures of one or more thereof such as, but not limited to Rh-Co-, Ni- and Ni-Cu, preferably in the form of oxides, sulfides or other metal-organic compounds.

Preferably the catalyst is a hydroprocessing catalyst comprising Ruthenium; Rhenium, Rh-Co-, Ni- and/or Ni-Cu as hydrogenating component on a catalyst carrier that is inert at the reaction conditions. Inert herein refers to a catalyst carrier not dissolving or otherwise decaying under the HDO conditions to avoid e.g. metal leaching or weakening of the catalyst pellets for instance due to the amount of water present in the feed. The catalyst support (or carrier) usually comprises solid substances with high porosity and able to withstand the temperature, pressure and the environment encountered in a hydrotreatment unit and under the specific HDO conditions, i.e. the presence of relatively large amounts of water in the feed., and preferably is shaped in the form of balls, rings or otherwise shaped extrudates, which may serve as a support for the active elements in the catalyst. The carrier typically may comprise a refractory oxide or mixtures thereof, preferably alumina, titania, ceria, zirconia, or it may comprise an inert component such as carbon or silicon carbide or carbon. Carriers that were found inert under the conditions of step a) are Zr0₂, Ce0₂, Ce0₂ and/or mixtures thereof such as CeO₂-ZrO₂, silicon carbide and/or carbon. If a catalyst comprising sulphided CoMo, NiMo or NiW is used, the catalyst may be sulphided in-situ or ex-situ. In the case of in-situ sulphiding, a sulphur source, usually hydrogen sulphide or a hydrogen sulphide precursor, is typically supplied to the catalyst during operation of the process. The carrier may further comprise a zeolitic compound. Any acidic zeolitic compound having sufficient stability at the reaction conditions to limit catalyst decay may suitably be used. Examples of zeolitic compounds include, but are not limited to, zeolite Y, zeolite beta, ZSM-5, ZSM-12, ZSM-22, ZSM-23, ZSM-48, SAPO-11, SAPO-41, and ferrierite. Examples of suitable catalysts include RhCo/Al₂O₃; Rh/ZrO₂; Rh/CeO₂; Ni/Cr₂O₃; Ni/Al₂O₃; Ni/ZrO₂; Ni-Cu/Al₂O₃; Ni-Cu/ZrO₂ and Ni-Cu/CeO₂.

The product stream obtained from the HDO step usually forms two or more phases upon cooling, depending upon the process conditions. According to the present invention, if the HDO process is performed at 300 °C, a three-phase product may be obtained. A top layer contains light organic components hereinafter referred to as a top-oil, the middle layer consists mainly of water with some dissolved organics hereinafter referred to as an aqueous phase, and the bottom layer also contains organic components, hereinafter referred to as a bottom oil. The bottom oil may contain most of the solids, for instance, the HDO catalyst and coke particles, and may be present in the form of a paste. Applicants have found that in spite of the different phases, the top oil and the bottom oil are substantially similar in, for instance, elemental composition and molecular weight distribution. The bottom oil may be suitably filtered, and mixed with the top oil to form an organic product of the HDO reaction step. Further, some gases may also be produced during the HDO reaction step. Examples of these gases include Carbon Dioxide and Methane.

According to the invention, a two-phase product may be obtained when the HDO step is carried out at temperatures in the range of 200 to 300 °C. The two-phase product contains an organic phase (bottom oil) and an aqueous phase. At HDO temperature significantly higher than 300 °C, again a two-phase product may be obtained, containing an organic phase (Top oil) and aqueous phase. According to the present invention, with increasing HDO temperatures, a net transfer of organic components from the aqueous phase to the oil phase, including the Top oil and the Bottom oil, was observed. This is believed to contribute to an increase in the carbon recovery from the oil product.

The product from the HDO step is then subjected to a separation step, preferably filtration, to separate the solids such as the catalyst particles.

The oxygen content (on dry basis) of the organic phase, hereinafter referred to as the partially deoxygenated pyrolysis oil, for varying HDO temperatures lies in the range of 5 wt% to 30 wt%.. The oxygen content (on dry basis) of the organic phase is preferably at least 6 wt%, more preferably at least 7 wt%, more preferably at least 8 wt%, more preferably at least 9 wt%, yet more preferably at least 10 wt%.

After step (a), preferably gaseous products are separated from the total liquid product obtained in step (a), which then is preferably separated into an aqueous phase comprising watersoluble compounds, and at least one organic phase comprising the partially (hydro-) deoxygenated pyrolysis oil.

In step (b), the partially deoxygenated pyrolysis oil obtained as the result of the HDO is subjected to catalytic cracking in the cracking step, in the presence of a hydrocarbon feed, preferably derived from a mineral crude oil.

Suitable hydrocarbon feeds invention are typical commercial FCC feeds, i.e. those portions of mineral crude oil or its refinery streams that have an initial boiling point of 340 °C or higher at atmospheric pressure and an average molecular weight ranging from about 200 to 600 or higher. Such hydrocarbon feedstocks to be used as co-feed for the purpose of the invention preferably include high boiling, non-residual oils such as straight run (atmospheric) gas oils, flashed distillate, coker gas oils, or atmospheric residue ('long residue') and vacuum residue ('short residue'). The co-feeding may be attained by blending the partially deoxygenated pyrolysis oil and the hydrocarbon feed streams prior to the entry into a cracking unit, or alternately, by adding them at different stages. The hydrocarbon feed used has a boiling point of at least 220°C, as measured by Gas Chromatograph Distillation (GCD) according to ASTM D-2887. Preferably, the boiling points range from 220°C to 650°C, more preferably from 300°C to 600°C. In a preferred embodiment, the hydrocarbon feed used as a co-feed for the purpose of the invention is selected from vacuum gas oil (VGO), or a Long Residue. The hydrocarbon feed, preferably vacuum gas oil (VGO)as a comparatively lighter feed having a higher H/C ratio, to partially deoxygenated pyrolysis oil ratio is preferably 4:1, although it will be appreciated by those skilled in the art that higher ratios such as 10:1 or 20: 1 will enhance the ease of processing.

The cracking step comprises contacting the partially deoxygenated pyrolysis oil with a cracking catalyst, preferably in the reaction zone of a fluidised catalytic cracking (FCC) apparatus. The reaction temperature preferably ranges from 450°C to 650°C, more preferably from 480°C to 600°C, and most preferably from 480°C to 560°C. The pressure in the reaction zone preferably ranges from 0.5 bar to 10 bar (0.05 MPa-1 MPa), more preferably from 1.0 bar to 6 bar (0.15 MPa to 0.6 MPa). The residence time of the cracking catalyst in the reaction zone preferably ranges from 0.1 seconds to 15 seconds, more preferably from 0.5 seconds to 10 seconds. The product stream obtained from the cracking step may be separated into one or more hydrocarbon fractions using, for example, a fractionator. According to the invention, a catalyst to partially deoxygenated pyrolysis oil ratio, hereinafter referred to as the catalyst to oil ratio, ranges from 2 to 20. Preferably, the catalyst to oil ratio is at least 3, more preferably at least 4, more preferably at least 5. The use of a higher catalyst to oil ratio results in an increase in conversion.

The cracking catalysts suitable for use in the process according to the invention are well known in the art. Although amorphous silica-alumina catalysts may be used, it is common that the cracking catalyst is zeolitic. The zeolitic catalyst comprises a zeolite and an amorphous binder. Examples of such binder materials include silica, alumina, titania, zirconia and magnesium oxide, or combinations of two or more of them.

The zeolite is usually a large pore zeolite. The large pore zeolite includes a zeolite comprising a porous, crystalline aluminosilicate structure having a porous internal cell structure on which the major axis of the pores is in the range of 0.62 nanometer to 0.8 nanometer. The axes of zeolites are depicted in the 'Atlas of Zeolite Structure Types', of W.M. Meier, D.H. Olson, and Ch. Baerlocher, Fourth Revised Edition 1996, Elsevier, ISBN 0-444-10015-6. Examples of such large pore zeolites include FAU or faujasite, preferably synthetic faujasite, for example, zeolite Y or X, ultra-stable zeolite Y (USY), Rare Earth zeolite Y (= REY) and Rare Earth USY (REUSY). According to the present invention USY is preferably used as the large pore zeolite

The cracking catalyst can also comprise a medium pore zeolite. The medium pore zeolite that can be used according to the present invention is a zeolite comprising a porous, crystalline aluminosilicate structure having a porous internal cell structure on which the major axis of the pores is in the range of 0.45 nanometer to 0.62 nanometer. Examples of such medium pore zeolites are of the MFI structural type, for example, ZSM-5; the MTW type, for example, ZSM-12; the TON structural type, for example, theta one; and the FER structural type, for example, ferrierite. According to the present invention, ZSM-5 is preferably used as the medium pore zeolite.

According to another embodiment, a blend of large pore and medium pore zeolites may be used. The ratio of the large pore zeolite to the medium pore size zeolite in the cracking catalyst is preferably in the range of 99:1 to 70:30, more preferably in the range of 98:2 to 85:15.

The total amount of the large pore size zeolite and/or medium pore zeolite that is present in the cracking catalyst is preferably in the range of 5 wt% to 40 wt%, more preferably in the range of 10 wt% to 30 wt%, and even more preferably in the range of 10 wt% to 25 wt% relative to the total mass of the cracking catalyst, the remainder being amorphous binder. According to the invention, the reaction zone is usually an elongated tube-like reactor, preferably a vertical reactor in which the pyrolysis oil and the cracking catalyst flow in an upward direction. The partially deoxygenated pyrolysis oil and the cracking catalyst may also flow in a downward direction. Combinations of downward and upward flow are also within the scope of the present invention. The partially deoxygenated pyrolysis oil and the cracking catalyst may be contacted in counterflow or crossflow configurations.

The product stream, comprising cracked hydrocarbons, obtained from the FCC apparatus is sent to a fractionation zone, where it is separated into one or more hydrocarbon fractions. Preferably, these hydrocarbon fractions include gasoline, light cycle oils (LCO) and coke. According to an embodiment, the product stream composition includes the gasoline fraction ranging from 30 wt% to 60 wt%, preferably from 40 wt% to 50 wt%, as measured by Gas Chromatograph Distillation (GCD) according to the methods described as per the ASTM D-2887 specifications . Further, the total product stream also includes the LCO fraction ranging from 15 wt% to 35 wt%, preferably from 20 wt% to 30 wt%.The catalyst cracking step according to the present invention may further preferably comprise a catalyst regeneration step. The catalyst regeneration step comprises burning off the coke to restore the catalyst activity by combusting the cracking catalyst in the presence of an oxygen-containing gas in a regenerator. The regeneration temperature preferably ranges from 575°C to 950°C, more preferably from 600°C to 850°C. The pressure in the regenerator preferably ranges from 0.5 bar to 10 bar (0.05 Mpa to 1 MPa), more preferably from 1.0 bar to 6 bar (0.1 MPa to 0.6 MPa)

Preferably, the step of catalytic cracking further involves a stripping step. The spent catalyst may be stripped to recover the products absorbed on the spent catalyst before the regeneration step. These products may be recycled and added to the product stream obtained from the cracking step.

In spite of the relatively high oxygen content and varying properties of the partially deoxygenated pyrolysis oils due to different HDO temperatures, the different samples described in Table1 were successfully co-processed with a hydrocarbon feed including, for instance, Vacuum Gas Oil or Long Residue. The products stream at standard FCC conditions included gasoline and Light Cycle Oil products without an excessive increase of undesired products such as coke and dry gas. Oxygenate-free hydrocarbon fractions were obtained due to hydrogen transfer from the VGO or Long Residue to the partially deoxygenated pyrolysis oil.

The process according to the present invention further may comprise step (e) of subjecting a product fraction obtained in step (d) to a process for the removal of heteroatom containing compounds to obtain a product fraction reduced in heteroatom content. This removal steps are well known in the art, and include for instance processes for the removal of sulphur (such as the MEROX process), nitrogen and/or oxygen containing compounds.

Products obtained from the hydrocarbon fractions are also within the scope of the invention. For example, the gasoline fraction may be desulphurised to reduce the sulphur content to less than 1000 ppmw, preferably to less than 500ppmw, more preferably to less than 200 ppmw to prepare a gasoline product. The products were found particularly useful as fuel components due to the low oxygen content, and the low amount of phenolic compounds formed in the process.

The process further preferably comprises step (f) of adding the product fraction obtained in step (e) to a fuel composition. One or more additives may be added to e.g. the desulphurised gasoline product to prepare a gasoline composition for commercial use. The additives may include performance enhancers such as anti-oxidants, corrosion inhibitors, ashless detergents, dehazers, dyes, lubricity improvers, synthetic or mineral oil carrier fluids. Examples of such suitable additives may also be identified in US-A 5855629, which is incorporated herein by reference. For the purpose of the invention, it should be understood that the one or more additives can be added separately to the gasoline product or can be blended with one or more diluents, forming an additive concentrate, and together added to the gasoline product. The gasoline composition according to the invention usually comprises a major amount (more than 50 wt%) of the gasoline product and a minor amount of the one or more additives described above, preferably ranging from 0.005 wt% to 10 wt%, more preferably from 0.01 wt% to 5wt%, and most preferably from 0.02 wt% to 1 wt%, based on the gasoline composition.

Similarly, the light cycle gas oil fraction may also be used for the production of heavy fuel oils or may be hydroprocessed further for being in the diesel fuel pool.

It may be understood that processing of the aforementioned hydrocarbon fractions is well known in the art and is in no way limiting to the scope of the invention. While some of the methods have been described herein, several other processes may be used to convert the hydrocarbon fractions into commercially usable products. These processes may include isomerisation, cracking into more valuable lighter products, blending with other fuels for commercial use, and other similar uses that have been disclosed in the art.

The invention is further illustrated by the following, nonlimiting examples.

### Example 1

Pyrolysis oil (2.5 kg approximately) was loaded into a 5 L autoclave followed by 5 wt. % of fresh (unused) Ru/C catalyst. The maximum operating temperature and pressure were 350 °C and 340 bar, respectively. The autoclave was filled with hydrogen until the desired starting pressure (typically 200 bar) was reached, and the valve between the reactor and the supply vessel was closed. Then, the electrical heating jacket and the high intensity hollow shaft stirrer (2000 rpm) were turned on. The typical heating rate was approximately 5.5 °C/min until 270 °C, being slower after that (-4 °C/min) . More hydrogen was added to the reactor until the desired reaction pressure was reached (preferably 290 bar). After the reaction was deemed complete, the H₂ supply was stopped and the stirrer was left on for 30 min more. The whole system was left to cool down overnight.

The product comprised 3 phases, an organic top and bottom phase, and an aqueous phase. The organic liquid product phases were combined, and then filtered (5pm steel filter) to remove the Ru/C catalyst. The oxygen content of the pyrolysis oils contained in the organic phases obtained after HDO is typically up to 30 wt%. The products obtained are summarized in the table 1 provided below:

**Table 1: Dry product yields and oil properties after HDO at different temperatures (Residence time: 4 h, total pressure 290 bar).**

| | | | | | |
|---|---|---|---|---|---|
| Temperature (°C) | 230 | 260 | 300 | 330 | 340 |

| Dry yields (wt. % of dry feed) | | | | | |
|---|---|---|---|---|---|
| Top oil + Bottom oil | 47 | 49 | 50 | 48 | 50 |
| Aqueous phase | 39 | 33 | 26 | 16 | 14 |
| Gas | 3 | 4 | 4 | 3 | 9 |
| Water produced | 9 | 10 | 13 | 19 | 18 |
| | | | | | |

| H₂ consumption | | | | | |
|---|---|---|---|---|---|
| NL H₂/kg feed oil | 232 | 237 | 290 | 297 | 326 |
| NL H₂/kg C in product | 1031 | 1059 | 1098 | 1089 | 1153 |
| NL H₂/MJ of product | 21.6 | 22 | 22.3 | 21.8 | 23.6 |
| | | | | | |

| Product properties | | | | | |
|---|---|---|---|---|---|
| Oil phase | Bottom oil | Bottom oil | Top oil | Top oil | Top oil |
| C dry (wt. %) | 63.0 | 66.3 | 67.7 | 74.2 | 73.3 |
| H dry (wt. %) | 9.0 | 9.3 | 9.7 | 10.3 | 9.8 |
| 0 dry^{b} (wt. %) | 28.0 | 24.4 | 22.6 | 15.5 | 16.9 |
| H₂O (wt. %) | 15.9 9 | 10.0 | 5.7 7 | 3.2 | 2.1 |
| HHVwet^{c} (MJ/kg) | 25.2 | 28.7 | 31.3 | 35.8 | 35.1 |
| MCRT (wt %) | 11.7 7 | 9.1 | 4.7 7 | 1.8 | 2.2 |
| MCRT of 20 wt % blend in Long Residue^{d} (wt %) | 3.2 | 2.9 | 2.2 | 1.9 | 2.0 |
| 0 wt% wet basis (including oxygen in water) | 37.7 | 30.8 | 26.4 | 17.8 | 18.4 |
| | | | | | |

| Gas composition | | | | | |
|---|---|---|---|---|---|
| CO₂ (mol %) | 81.8 | 48.4 | 53.1 | 58.7 | 61.0 |
| CO (mol %) | 0.8 | 4.6 | 2.0 | 1.4 | 1.2 |
| CH₄ (mol %) | 14.1 | 24.7 | 22.5 | 21.4 | 22.1 |
| C₂H₆-C₃H₈ (mol %) | 3.3 | 21.7 | 22.2 | 18.5 | 15.7 |
| b Calculated as difference | | | | | |
| c Higher heating value calculated using Reed's equation | | | | | |
| d MCRT (ASTM D4530) of Long Residue only = 2.04 wt % | | | | | |

### Example 2 (and comparative examples)

Partially deoxygenated pyrolysis oil (with up to 30%wt oxygen content) as obtained in Example 1 was blended with a Long Residue in the ratio 1:4 and subjected to catalytic cracking in a small-scale fluidized catalytic cracking reactor. A commercial equilibrium catalyst comprising ultra stable zeolite Y (USY) in an amorphous alumina matrix was used as the cracking catalyst. The cracking catalyst to oil ratios used were 3, 4, 5, 6, 6.5, 7 and 8. The reaction temperature was kept at 520 °C for HDO oil blends with Long Residue and the pressure was maintained at 1.2 bar (0.12 MPa), e.g. just above atmospheric pressure. The gas phase product was quantified and characterized by on-line gas chromatography (GC). The liquid product stream was collected at -15 C and analysed by True Boiling Point (TBP) analysis and two-dimensional GC. The results of the experiment with regard to product distribution are represented in Tables 2 and 3 below. The results of comparative example 2 with undiluted HDO pyrolysis oils are depicted in Tables 4 and 5.

**Table 2: Product yields at constant 60 wt. % conversion from catalytic cracking of 20 wt. % HDO oil in Long Residue feed at 520 °C (yields of products (in wt. %) normalised by amount of produced water) .**

| Product yield | Long Residue only | Upgraded pyrolysis oils | | | | |
|---|---|---|---|---|---|---|
| Dry oxygen content (wt %) | 0 | 28.0 | 24.2 | 22.6 | 15.5 | 16.9 |
| | Product yields at constant 60 % conversion relative to feed alone of 20 % HDO oil + Long Residue (wt %) | | | | | |
| Cat/Oil ratio | 3.1 | 4.3 | 3.4 | 3.4 | 3.7 | 3.8 |
| LPG yield | 8.5 | 11.0 | 10.1 | 10.2 | 9.3 | 9.6 |
| Gasoline yield | 44.1% | 43.7 | 44.7 | 46.0 | 45.3 | 44.7 |
| Coke yield | 5.9% | 7.8 | 7.1 | 5.51 | 5.7 | 6.0 |
| LCO yield | 25.2% | 23.1 | 23.8 | 23.9 | 24.8 | 25.0 |

It can be seen that only a slightly higher Cat/Oil ratio is required when Long Residue/20 wt % HDO blends were processed compared to Long Residue itself. The product yields (values normalised by the amount of produced water) did not differ significantly. This was unexpected taking into account the differences in dry O content ranging from 15.5 to 28.0 wt. %. This indicates that, surprisingly, the HDO step might be less severe than traditionally thought to be required, even suggesting that the HDO step at low temperature (the "stabilisation step") might be enough to enable co-processing. This would reduce hydrogen consumption even further during pyrolysis oil upgrading.

Surprisingly, the products contained very little oxygen (See Table 3), indicating that hydrogen transfer from the refinery feed eliminates the HDO oil oxygen as water. The residual oxygen containing compounds were identified and quantified (Table 3). A very low level of only 0.55 wt % total phenols corresponds to only ca. 0.07 wt % residual oxygen in the product. To those skilled in the art, it will be clear that this will easily be removed by subsequent refinery processing of conventional FCC product streams to fuel pool components.

**Table 3. Residual oxygenates (ppm wt) in the cat cracking total liquid product as measured by GC*GC*Time of Flight Mass Spectrometry.**

| | | | |
|---|---|---|---|
| Oxygen content of HDO oil | 28.0 | 24.4 | 22.6 |
| | | | |
| Phenol | 2769 | 1686 | 1169 |
| 3/4-MePhenol | 1606 | 944 | 730 |
| 2,5-DiMePhenol | 3223 | 1660 | 1194 |
| 2,4/5-DiMePhenol | 336 | 164 | 135 |
| 2,3-DiMePhenol | 492 | 276 | 125 |
| 2-MePhenol | 1855 | 1506 | 1250 |
| 2-EtPhenol | 1593 | 765 | 652 |
| 3,5-DiMePhenol | 508 | 221 | 193 |
| 3/4-EtPhenol | 382 | 155 | 125 |
| | | | |
| Totals phenols | 12765 | 7377 | 5572 |

Table 4 shows the high coke and dry gas yields from the catalytic cracking of undiluted partially hydrodeoxygenated pyrolysis oils and the much higher Cat/Oil ratios required to achieve 60 wt % conversion. In Table 5 the higher amounts of residual oxygenates in the product are given from the catalytic cracking of the undiluted HDO oils.

**Table 4. Product yields at constant 60 wt. % conversion from the catalytic cracking of undiluted HDO oils at 520 °C**

| | | | |
|---|---|---|---|
| Oxygen content of HDO oil | 22.6 | 15.5 | 16.9 |
| Cat/Oil ratio | 20.2 | 12 | 12.6 |
| LPG yield | 11.7 | 10.5 | 9.7 |
| Gasoline yield | 22.3 | 34.4 | 36.2 |
| LCO yield | 10.9 | 19.3 | 18.4 |
| Dry gas yield | 10.8 | 5.6 | 5.7 |
| Coke yield | 37.5 | 22.4 | 21.9 |

| | | | |
|---|---|---|---|
| Uct for undiluted HDO feed. | | | |

**Table 5. Residual oxygenates (ppm wt.) in the cat cracking total liquid product as measured by GC*GC*Time of Flight Mass Spectrometry.**

| | | | |
|---|---|---|---|
| Oxygen content of HDO oil | 22.6 | 15.5 | 16.9 |
| Phenol | 12727 | 10120 | 9800 |
| 3/4-MePhenol | 7179 | 6799 | 6634 |
| 2,5-DiMePhenol | 20227 | 16400 | 16192 |
| 2,4/5-DiMePhenol | 2384 | 2154 | 2061 |
| 2,3-DiMePhenol | 2236 | 2602 | 2542 |
| 2-MePhenol | 11273 | 10500 | 10279 |
| 2-EtPhenol | 11261 | 10161 | 10131 |
| 3,5-DiMePhenol | 2808 | 2717 | 2652 |
| | | | |
| 3/4-EtPhenol | 2949 | 2586 | 2575 |
| Totals phenols | 73045 | 64039 | 62865 |

When comparing this to the results obtained from the diluted HDO pyrolysis oils, it is clear that the dilution effect reduces the amount of coke formation, as well as the amount of phenol compounds in the resulting products strongly, both highly unexpected synergistic effects due to the process scheme according to the present invention.

The advantages of the process of the present invention are among others, that the proposed co-processing of a partially deoxygenated pyrolysis oil through a catalytic cracking process step enables the conversion of lignocellulosic biomass into useful products using the existing refinery units. Further, the present invention enables the use of decentralised pyrolysis plants which may be located near the source of biomass feedstock, thus reducing the transportation costs by transporting pyrolysis oil instead of the biomass. Further, during the pyrolysis route for conversion of biomass, the minerals from biomass remain largely in the ash, thus reducing the inorganic content in the pyrolysis oil that could poison the catalysts such as the HDO catalyst, the cracking catalyst and the like. Further, since the oxygen wt % in the pyrolysis is in the range of 5 to 30% the amount of hydrogen that is consumed during the HDO step is reduced. Lastly, since the HDO step may take place in a close proximity of the refinery, all the existing utilities and distribution channels can be easily leveraged, which makes the economics of the existing process more favourable.

## Claims

1. A process for catalytic cracking of a pyrolysis oil derived from material comprising lignocellulose, comprising the steps of a) subjecting a feed comprising the pyrolysis oil to a hydrodeoxygenation step to obtain a product stream comprising a partially deoxygenated pyrolysis oil; b) separating the partially deoxygenated pyrolysis oil having an oxygen content of from 5 to 30 wt% from the product stream obtained in a); c) contacting the partially deoxygenated pyrolysis oil obtained in b) in the presence of a hydrocarbon feed derived from a mineral crude oil with a cracking catalyst under catalytic cracking conditions to obtain a deoxygenated and cracked product stream; and d) separating at least one product fraction from the product stream obtained in c).

2. The process according to claim 1, wherein the hydrocarbon feed has an initial boiling point of at least 220°C, as measured according to ASTM D-2887.

3. The process of any one of claims 1 or 2, wherein the hydrocarbon feed is a vacuum gas oil fraction or a Long Residue.

4. The process according to any one of claims 1 to 3, wherein the catalytic cracking is performed at a temperature greater than 450°C.

5. The process according to any one of claims 1 to 4, wherein the cracking catalyst comprises a zeolite.

6. A process according to any one of claims 1 to 5, wherein step a) is performed at a temperature of from 200 to below 400°C.

7. A process according to any one of claims 1 to 6, further comprising the step (e) of subjecting a product fraction obtained in step (d) to a process for the removal of heteroatom containing compounds to obtain a product fraction reduced in heteroatom content.

8. A process according to claim 7, further comprising the step (f) of adding the product fraction obtained in step (e) to a fuel composition.

9. A process according to any one of claims 1 to 8, wherein the catalyst in step (a) is a hydroprocessing catalyst comprising Ruthenium; Rhenium, Rh-Co-, Ni- and/or Ni-Cu as hydrogenating component on a catalyst carrier that is inert at the reaction conditions.

10. A fuel product obtainable from a product fraction according to any one of claims 7 to 9, and further containing at least one additive.
